# EUROPEAN PATENT APPLICATION

(11) **EP 1 220 117 A2**
(43) Date of publication of application: **03.07.2002**
(21) Application number: 01310774.3
(22) Date of filing: 21.12.2001
(51) Int. Cl.: G06F 17/30

(54) **An information delivery device and method, an information retrieving device and method, an information delivery retrieving system, and information recording medium**

(30) Priority: 28.12.2000 JP 2000402349
(71) Applicant: Pioneer Corporation, Meguro-ku, Tokyo (JP)
(72) Inventor: Kuroda, Kazuo, c/o Pioneer Corporation, Tokorozawa-shi, Saitama (JP)
(74) Representative: Haley, Stephen

(57) **Abstract**

An AV information delivery device includes a storage section, abstracting section and a delivery section. The storage section stores AV information including at least one of voice information and video information. The abstracting section abstracts at least a part of the stored AV information, and generates abstraction information indicative of contents of the AV information. The delivery section delivers the generated abstraction information together with the AV information having the contents indicated by the abstraction information.

## Description

The present invention relates to anAV information delivery device andmethod, an AV information retrieving device and method, an AV information delivery retrieving system and an information recording medium. More particularly, the invention relates to an AV information delivery device and method for delivering AV information constituted to include at least one of voice information and video information through a network such as an internet, an AV information retrieving device and method for retrieving the contents of the AV information thus delivered, an AV information delivery retrieving system and an information recording medium in which a program for the delivery or retrieval is recorded to be readable through a computer.

### 2. Description of the Related Art

In recent years, video information including voice information has been electronically delivered through a so-called internet (the video information will be hereinafter referred to as AV (Audio Visual) information).

In this case, conventionally, a data base for retrieving the AV information is usually built in the delivery source of the AV information and is then delivered.

More specifically, one AV information (for example, one movie or one television broadcasting program) is stored as a data base in relation to retrieval key information for retrieving the contents of the AV information in the delivery source, and AV information corresponding to a retrieval key input by a user in a delivery destination is retrieved from the data base and is delivered to the user in the delivery destination.

According to the structure of the conventional AV information delivery system, however, a data base having a retrieval key set depending on the subjectivity of the person in charge of a delivery source has already been built before the delivery. In the first place, the retrieval key is utilized by the user to be the delivery destination. In many cases, if the retrieval key is set depending on the subjectivity of the user, the AV information desired by the user can be obtained with higher precision in a shorter time.

According to the structure of the conventional delivery system, therefore, there has been a problem in that desirable AV information can be neither retrieved nor acquired rapidly with high precision in a short time in some cases.

According to the structure of the conventional delivery system, moreover, the user is to change a plurality of delivered AV information into a data base again together with a corresponding retrieval key selected by the user himself (herself). As a result, there has also been a problem in that an unnecessary time is taken to build a desirable AV information data base for the user.

Therefore, the invention has been made in consideration of the problems and has an object to provide an AV information delivery device and method capable of retrieving AV information desired by a user with high precision in a short time and capable of building a data base which can retrieve the desired AV information with high precision, an AV information retrieving device and method for retrieving the contents of the delivered AV information, an AV information delivery retrieving system, and an information recording medium in which a program for the delivery or retrieval is recorded to be readable through a computer.

In order to attain the object, a first aspect of the invention is directed to an AV information delivery device comprising a storage section such as a content storage portion for storing AV information constituted to include at least one of voice information and video information, an abstracting section such as an abstraction data extracting portion for abstracting at least a part of the stored AV information and generating abstraction information indicative of contents of the AV information, and a delivery section such as a CPU for delivering the generated abstraction information together with the AV information having contents indicated by the abstraction information.

Accordingly, the delivered AV information is retrieved by using the abstraction information in a delivery destination. consequently, the AV information can be retrieved based on the abstraction information with high precision which is generated in a delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

In order to attain the object, a second aspect of the invention is directed to the AV information delivery device according to the first aspect of the invention, wherein the abstracting section generates a data string indicative of a voice or a sound included in the voice information as the abstraction information.

Accordingly, the data string indicative of a voice or a sound included in the voice information is generated as the abstraction information. Therefore, it is possible to generate and deliver the abstraction information faithful to the contents of the voice information.

In order to attain the object, a third aspect of the invention is directed to the AV information delivery device according to the first or second aspect of the invention, wherein the abstracting section generates pattern data having a waveform featuring the video information as the abstraction information.

Accordingly, the pattern data having the waveform featuring the video information are generated as the abstraction information. Therefore, it is possible to generate and deliver the abstraction information faithful to the contents of the video information.

In order to attain the object, a fourth aspect of the invention is directed to the AV information delivery device according to any of the first to third aspects of the invention, wherein the delivery section delivers the generated abstraction information with an inclusion in a separate information unit from an information unit constituted to include the AV information having the contents indicated by the abstraction information.

Accordingly, the abstraction information is delivered with an inclusion in a separate information unit from an information unit constituted to include the AV information having the contents indicated by the abstraction information. Consequently, it is possible to easily acquire the abstraction information and the AV information separately from each other in the delivery destination.

In order to attain the object, a fifth aspect of the invention is directed to the AV information delivery device according to any of the first to third aspects of the invention, wherein the delivery section replaces, with the abstraction information, a part of an information unit constituted to include the AV information having the contents indicated by the generated abstraction information and thus delivers the abstraction information.

Accordingly, a part of the information unit constituted to include the AV information having the contents indicated by the abstraction information is replaced with the abstraction information and is then delivered. Therefore, it is possible to deliver the abstraction information and the corresponding AV information in a short time and a small amount of information.

In order to attain the object, a sixth aspect of the invention is directed to the AV information delivery device according to any of the first to third aspects of the invention, wherein the delivery section buries the abstraction information in the video information in an information unit constituted to include the AV information having the contents indicated by the generated abstraction information and thus delivers the abstraction information.

Accordingly, the abstraction information is buried in the video information in the information unit constituted to include the AV information having the contents indicated by the abstraction information and is thus delivered. Therefore, it is possible to deliver the abstraction information in privacy.

In order to attain the object, a seventh aspect of the invention is directed to the AV information delivery device according to any of the first to third aspects of the invention, wherein the delivery section includes the abstraction information in an outside of a valid display range in the video information included in an information unit constituted to contain the AV information having the contents indicated by the generated abstraction information and thus delivers the abstraction information.

Accordingly, the abstraction information is included in the outside of the valid display range in the video information included in the information unit constituted to contain the AV information having the contents indicated by the abstraction information and is thus delivered. Therefore, it is possible to deliver the abstraction information and the corresponding AV information easily and rapidly.

In order to attain the object, an eighth aspect of the invention is directed to an AV information retrieving device for retrieving the AV information delivered together with the abstraction information by means of the AV information delivery device according to any of the first to seventh aspects of the invention by using retrieval key information, comprising an acquiring section such as a modem for acquiring the abstraction information and the AV information which are delivered, an input section for inputting the retrieval key information, an abstracting section such as an abstraction data generating portion for abstracting the retrieval key information thus input and generating abstraction key information, and a retrieving section such as a CPU for retrieving the delivered abstraction information which is similar to the generated abstraction key information.

Accordingly, the AV information is retrieved based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

In order to attain the object, a ninth aspect of the invention is directed to the AV information retrieving device according to the eighth aspect of the invention, further comprising an output section such as a display for outputting the AV information corresponding to the abstraction information retrieved by the retrieving section as the AV information corresponding to the retrieval key information.

Accordingly, the AV information can be retrieved based on the abstraction information with high precision which is generated in the delivery source, and furthermore, a user can easily confirm each of the results of the retrieval in a delivery destination. Therefore, even if the results of the retrieval include an improper result, the same result can be removed in judgment of the user.

In order to attain the object, a tenth aspect of the invention is directed to the AV information retrieving device according to the eighth or ninth aspect of the invention, further comprising a return section such as a CPU for returning, to the AV information delivery device, retrieval result information generated based on a retrieval result obtained by the retrieving section.

Accordingly, the retrieval result information generated based on the result of the retrieval is returned to the AV information delivery device. Therefore, the returned retrieval result information is simply summed and changed into a data base in the AV information delivery device. Thus, it is possible to automatically and easily build a data base with high precision.

In order to attain the object, an eleventh aspect of the invention is directed to the AV information retrieving device according to the tenth aspect of the invention, wherein the retrieval result information is constituted by the retrieval key information, content identification data for specifying contents including at least the abstraction information set to be similar to the retrieval key information by the retrieving section and the AV information corresponding to the abstraction information, and at least one of address information and time information which indicate a portion similar to the retrieval key information in the contents.

Accordingly, the retrieval key information, the content identification data, and at least one of the address information and the time information which are caused to correspond to each other in the AV information retrieving device are returned to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a twelfth aspect of the invention is directed to the AV information retrieving device according to the tenth or eleventh aspect of the invention, further comprising a network retrieving section such as a CPU for retrieving network information present on a network which corresponds to the retrieval key information, the network information thus retrieved being included in the retrieval result information and being returned to the AV information delivery device through the return section.

Accordingly, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a thirteenth aspect of the invention is directed to the AV information delivery device comprising a data base such as a storage portion for storing the retrieval result information returned from the AV information retrieving device according to the tenth aspect of the invention.

Accordingly, the retrieval result information returned from the AV information retrieving device is simply summed and changed into a data base. Consequently, it is possible to automatically build a data base with high precision.

In order to attain the object, a fourteenth aspect of the invention is directed to the AV information delivery device according to the thirteenth aspect of the invention, wherein the retrieval result information is constitutedby the retrieval key information, content identification data for specifying contents including at least the abstraction information set to be similar to the retrieval key information by the retrieving section and the AV information corresponding to the abstraction information, and at least one of address information and time information which indicate a portion similar to the retrieval key information in the contents, and the data base stores the retrieval key information, the content identification data and at least one of the address information and the time information correspondingly to each other.

Accordingly, the retrieval key information, the content identification data and at least one of the address information and the time information which are caused to correspond to each other in the AV information retrieving device are returned, and the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a fifteenth aspect of the invention is directed to the AV information delivery device comprising a data base such as a storage portion for storing the retrieval key information, the content identification data, at least one of the address information and the time information and the network information which are included in the retrieval result information returned from the AV information retrieving device according to the twelfth aspect of the invention correspondingly to each other

Accordingly, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a sixteenth aspect of the invention is directed to the AV information delivery device according to the fourteenth or fifteenth aspect of the invention, wherein the data base decides a degree of correlation of the retrieval key information and the content identification data in a majority principle intended for all the retrieval result information and stores only the retrieval result information having the high degree of correlation.

Accordingly, the degree of correlation of the retrieval key information and the content identification data is decided in the majority principle intended for all the retrieval result information and only the retrieval result information having the high degree of correlation is stored. Therefore, as the summarization of the retrieval result information proceeds, the retrieval result information having a low association of the retrieval key information with the content identification data is automatically deleted. Thus, it is possible to automatically increase the precision in a data base.

In order to attain the object, a seventeenth aspect of the invention is directed to an AV information retrieving device for retrieving the AV information in the data base in the AV information delivery device according to any of the fourteenth to sixteenth aspects of the inventionbyusing database retrieval information, comprising an input section for inputting the data base retrieval information, a retrieving section for retrieving an inside of the data base by using the input data base retrieval information and retrieving the AV information corresponding to the input data base retrieval information, and an output section for outputting the retrieved AV information as the AV information corresponding to the data base retrieval information.

Accordingly, it is possible to retrieve the necessary AV information with high precision based on a data base having high precision.

In order to attain the object, an eighteenth aspect of the invention is directed to an AV information delivery retrieving system comprising the AV information retrieving device according to any of the first to seventh aspects or the thirteenth to seventeenth aspects of the invention, and the AV information retrieving device according to any of the eighth to twelfth aspects of the invention.

Accordingly, it is possible to retrieve the AV information rapidly with high precision on the same conditions in all the AV information retrieving devices.

In order to attain the object, a nineteenth aspect of the invention is directed to an AV information delivery method comprising the steps of abstracting at least a part of AV information constituted to include at least one of voice information and video information and generating abstraction information indicative of contents of the AV information, and delivering the generated abstraction information together with the AV information having the contents indicated by the abstraction information.

Accordingly, the delivered AV information is retrieved by using the abstraction information in a delivery destination. Consequently, the AV information can be retrieved based on the abstraction information with high precision which is generated in a delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

In order to attain the object, a twentieth aspect of the invention is directed to an AV information retrieving method of retrieving the AV information delivered together with the abstraction information by the AV information delivery method according to the nineteenth aspect of the invention by using retrieval key information, comprising the steps of acquiring the abstraction information and the AV information which are delivered, inputting the retrieval key information, abstracting the retrieval key information thus input and generating abstraction key information, and retrieving the delivered abstraction information which is similar to the generated abstraction key information.

Accordingly, the AV information is retrieved based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

In order to attain the object, a twenty-first aspect of the invention is directed to the AV information retrieving method according to the twentieth aspect of the invention, further comprising an output step of outputting the AV information corresponding to the abstraction information retrieved at the retrieving step as the AV information corresponding to the retrieval key information.

Accordingly, the AV information can be retrieved based on the abstraction information with high precision which is generated in the delivery source, and furthermore, a user can easily confirm each of the results of the retrieval in a delivery destination. Therefore, even if the results of the retrieval include an improper result, the same result can be removed in judgment of the user.

In order to attain the object, a twenty-second aspect of the invention is directed to the AV information retrieving method according to the twentieth or twenty-first aspect of the invention, further comprising a return step of returning retrieval result information generated based on a retrieval result obtained at the retrieving step.

Accordingly, the retrieval result information generated based on the result of the retrieval is returned to the AV information delivery device. Therefore, the returned retrieval result information is simply summed and changed into a data base in the AV information delivery device. Thus, it is possible to automatically and easily build a data base with high precision.

In order to attain the object, a twenty-third aspect of the invention is directed to the AV information retrieving method according to the twenty-second aspect of the invention, wherein the retrieval result information is constituted by the retrieval key information, content identification data for specifying contents including at least the abstraction information set to be similar to the retrieval key information by the retrieving section and the AV information corresponding to the abstraction information, and at least one of address information and time information which indicate a portion similar to the retrieval key information in the contents.

Accordingly, the retrieval key information, the content identification data, and at least one of the address information and the time information which are caused to correspond to each other in the AV information retrieving device are returned to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a twenty-fourth aspect of the invention is directed to the AV information retrieving method according to the twenty-second or twenty-third aspect of the invention, further comprising a network retrieving step of retrieving network information present on a network which corresponds to the retrieval key information, the network information thus retrieved being included in the retrieval result information and being returned at the returning step.

Accordingly, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a twenty-fifth aspect of the invention is directed to the AV information delivery method comprising a data base step of storing the retrieval result information returned by the AV information retrieving method according to the twenty-second aspect of the invention.

Accordingly, the retrieval result information returned from the AV information retrieving device is simply summed and changed into a data base. Consequently, it is possible to automatically build a data base with high precision.

In order to attain the object, a twenty-sixth aspect of the invention is directed to the AV information delivery method according to the twenty-fifth aspect of the invention, wherein the retrieval result information is constituted by the retrieval key information, content identification data for specifying contents including at least the abstraction information set to be similar to the retrieval key information at the retrieving step and the AV information corresponding to the abstraction information, and at least one of address information and time information which indicate a portion similar to the retrieval key information in the contents, and the retrieval key information, the content identification data and at least one of the address information and the time information are stored correspondingly to each other at the data base step.

Accordingly, the retrieval key information, the content identification data and at least one of the address information and the time information which are caused to correspond to each other in the AV information retrieving device are returned, and the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a twenty-seventh aspect of the invention is directed to the AV information delivery method comprising a data base step of storing the retrieval key information, the content identification data, at least one of the address information and the time information and the network information which are included in the retrieval result information returned by the AV information retrieving method according to the twenty-fourth aspect of the invention correspondingly to each other

Accordingly, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a twenty-eighth aspect of the invention is directed to the AV information delivery method according to the twenty-sixth or twenty-seventh aspect of the invention, wherein a degree of correlation of the retrieval key information and the content identification data is decided in a majority principle intended for all the retrieval result information and only the retrieval result information having the high degree of correlation is stored at the data base step.

Accordingly, the degree of correlation of the retrieval key information and the content identification data is decided in the majority principle intended for all the retrieval result information and only the retrieval result information having the high degree of correlation is stored. Therefore, as the summarization of the retrieval result information proceeds, the retrieval result information having a low association of the retrieval key information with the content identification data is automatically deleted. Thus, it is possible to automatically increase the precision in a data base.

In order to attain the object, a twenty-ninth aspect of the invention is directed to an AV information retrieving method of retrieving the AV information stored by the AV information delivery method according to any of the twenty-fifth to twenty-eighth aspects of the invention by using data base retrieval information, comprising the steps of inputting the data base retrieval information, retrieving an inside of the data base by using the input data base retrieval information and retrieving the AV information corresponding to the input data base retrieval information, and outputting the retrieved AV information as the AV information corresponding to the data base retrieval information.

Accordingly, it is possible to retrieve the necessary AV information with high precision based on a data base having high precision.

In order to attain the object, a thirtieth aspect of the invention is directed to an information recording medium recording an AV information delivery program to be readable through a delivery computer included in an AV information delivery device containing a storage section such as a content storage portion for storingAV information constituted to include at least one of voice information and video information, wherein the delivery computer is caused to function as a generating section for abstracting each of the AV information and generating abstraction information indicative of contents of the AV information, and a delivery section for delivering the generated abstraction information together with the AV information having the contents indicated by the abstraction information.

Accordingly, the delivery computer functions to retrieve the delivered AV information by using the abstraction information in a delivery destination. Consequently, the AV information can be retrieved based on the abstraction information with high precision which is generated in a delivery source. Thus, it is possible to retrieve the AV information with high precision on the same conditions in all the delivery destinations.

Moreover, the delivery computer functions to generate the abstraction information in the delivery source. Therefore, it is not necessary to generate the abstraction information in the delivery destination. Thus, the AV information can be retrieved rapidly.

In order to attain the object, a thirty-first aspect of the invention is directed to an information recording medium recording an AV information retrieval program to be readable through a retrieving computer included in an AV information retrieving device for retrieving, by using retrieval key information, the AV information delivered together with the abstraction information through the AV information delivery device according to the thirtieth aspect of the invention, wherein the retrieving computer is caused to function as an acquiring section for acquiring the abstraction information and the AV information which are delivered, an input section for inputting the retrieval key information, an abstracting section for abstracting the retrieval key information thus input and generating abstraction key information, and a retrieving section for retrieving the delivered abstraction information which is similar to the generated abstraction key information.

Accordingly, the retrieving computer functions to retrieve the AV information based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

In order to attain the object, a thirty-second aspect of the invention is directed to the information recording medium recording the AV information retrieval program to be readable through the retrieving computer according to the thirty-first aspect of the invention, wherein the retrieving computer is further caused to function as an output section for outputting, as the AV information corresponding to the retrieval key information, the AV information corresponding to the abstraction information retrieved by the retrieving computer functioning as the retrieving section.

Accordingly, the AV information can be retrieved based on the abstraction information with high precision which is generated in the delivery source, and furthermore, a user can easily confirm each of the results of the retrieval in the delivery destination. Therefore, even if the results of the retrieval include an improper result, the same result can be removed in judgment of the user.

In order to attain the object, a thirty-third aspect of the invention is directed to the information recording medium recording the AV information retrieval program to be readable through the retrieving computer according to the thirty-first or thirty-second aspect of the invention, wherein the retrieving computer is further caused to function as a return section for returning retrieval result information generated based on a retrieval result in the retrieving computer functioning as the retrieving section to the AV information delivery device.

Accordingly, the retrieving computer functions to return the retrieval result information generated based on the result of the retrieval to the AV information delivery device. Therefore, the returned retrieval result information is simply summed and changed into a data base in the AV information delivery device. Thus, it is possible to automatically and easily build a data base with high precision.

In order to attain the object, a thirty-fourth aspect of the invention is directed to the information recording medium recording the AV information retrieval program to be readable through the retrieving computer according to the thirty-third aspect of the invention, wherein the retrieval result information is constituted by the retrieval key information, content identification data for specifying contents including at least the abstraction information set to be similar to the retrieval key information by the retrieving computer functioning as the retrieving section and the AV information corresponding to the abstraction information, and at least one of address information and time information which indicate a portion similar to the retrieval key information in the contents.

Accordingly, the retrieving computer functions to return the retrieval key information, the content identification data, and at least one of the address information and the time information which are caused to correspond to each other in the AV information retrieving device to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a thirty-fifth aspect of the invention is directed to the information recording medium recording the AV information retrieval program to be readable through the retrieving computer according to the thirty-third or thirty-fourth aspect of the invention, wherein the retrieving computer is further caused to function as a network retrieving section for retrieving network information present on a network which corresponds to the retrieval key information, the network information thus retrieved being included in the retrieval result information and being returned to the AV information delivery device through the retrieving computer functioning as the return section.

Accordingly, the retrieving computer functions to return the corresponding network information in the AV information retrieving device to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a thirty-sixth aspect of the invention is directed to an information recording medium recording the AV information delivery program to be readable through the delivery computer, wherein the delivery computer is caused to function as a data base for storing the retrieval result information returned from the AV information retrieving device according to the thirty-first aspect of the invention.

Accordingly, the retrieval result information returned from the AV information retrieving device is simply summed and changed into a data base. Consequently, it is possible to automatically build a data base with high precision.

In order to attain the object, a thirty-seventh aspect of the invention is directed to the information recording medium recording the AV information delivery program to be readable through the delivery computer according to the thirty-sixth aspect of the invention, wherein the retrieval result information is constituted by the retrieval key information, content identification data for specifying contents including at least the abstraction information set to be similar to the retrieval key information by the retrieving section and the AV information corresponding to the abstraction information, and at least one of address information and time information which indicate a portion similar to the retrieval key information in the contents, and the delivery computer functioning as the data base is caused to function to store the retrieval key information, the content identification data and at least one of the address information and the time information correspondingly to each other.

Accordingly, the retrieval key information, the content identification data and at least one of the address information and the time information which are caused to correspond to each other in the AV information retrieving device are returned, and the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

In order to attain the object, a thirty-eighth aspect of the invention is directed to an information recording medium recording the AV information delivery program to be readable through the delivery computer, wherein the delivery computer is caused to function as a data base for storing the retrieval key information, the content identification data, at least one of the address information and the time information and the network information which are included in the retrieval result information returned from the AV information retrieving device according to the thirty-fifth aspect of the invention correspondingly to each other.

Accordingly, the delivery computer functions to return the corresponding network information in the AV information retrieving device to the AV information delivery device. Therefore, it is possible to easily build a data base with high precision by changing, into a data base, the retrieval key information and the network information and other retrieval result information which are returned correspondingly to each other in the AV information delivery device.

In order to attain the object, a thirty-ninth aspect of the invention is directed to the information recording medium recording the AV information delivery program to be readable through the delivery computer according to the thirty-seventh or thirty-eighth aspect of the invention, wherein the delivery computer functioning as the data base is caused to function to decide a degree of correlation of the retrieval key information and the content identification data in a majority principle intended for all the retrieval result information and to store only the retrieval result information having the high degree of correlation.

Accordingly, the delivery computer functions to decide the degree of correlation of the retrieval key information and the content identification data in the majority principle intended for all the retrieval result information and to store only the retrieval result information having the high degree of correlation. Therefore, as the summarization of the retrieval result information proceeds, the retrieval result information having a low association of the retrieval key information with the content identification data is automatically deleted. Thus, it is possible to automatically increase the precision in a data base.

In order to attain the object, a forty aspect of the invention is directed to an information recording medium recording an AV information retrieval program to be readable through a retrieving computer in an AV information retrieving device for retrieving the AV information stored in the AV information delivery device according to any of the thirty-sixth to thirty-ninth aspects of the invention by using data base retrieval information, wherein the retrieving computer is caused to function as an input section for inputting the data base retrieval information, a retrieving section for retrieving an inside of the data base by using the input data base retrieval information and retrieving the AV information corresponding to the input data base retrieval information, and an output section for outputting the retrieved AV information as the AV information corresponding to the data base retrieval information.

Accordingly, it is possible to retrieve the necessary AV information with high precision based on a data base having high precision.

**In the Drawings**;
Fig. 1 is a block diagram showing the whole structure of a content delivery system according to an embodiment of the invention.
Fig. 2 is a block diagram showing the detailed structure of a content provider according to the embodiment,
Fig. 3 is a block diagram showing the detailed structure of an abstraction data extracting portion according to the embodiment.
Figs. 4A and 4B are diagrams illustrating the generation of abstraction data according to the embodiment.
Fig. 5 is a flow chart showing a content downloading process.
Figs. 6A to 6D are diagrams illustrating configurations in which contents are to be downloaded.
Fig. 7 is a block diagram showing the detailed structure of a retrieval terminal according to the embodiment.
Fig. 8 is a flow chart showing a partial retrieving process according to the embodiment.
Figs. 9A and 9B shows an example (I) of a screen displayed in the partial retrieving process. Fig. 9A is a diagram illustrating an initial menu screen and Fig. 9B is a diagram illustrating a retrieval input screen.
Figs. 10 show an example (II) of a screen displayed in the partial retrieving process.
Figs. 11A and 11B show the structure of each data base according to the embodiment. Fig. 11A is a diagram showing an example of a data base built in a storage portion in the retrieval terminal and Fig. 11B is a diagram showing an example of a data base in the content provider.
Figs. 12A and 12B illustrate a method cf building a data base according to the embodiment. Fig. 12A is a chart (I) illustrating the building method and Fig. 12B is a chart (II) illustrating the building method.
Fig. 13 is a flow chart showing a data base retrieving process according to the embodiment, and
Figs. 14A and 14B show an example of a screen displayed in the data base retrieving process. Fig. 14A is a diagram illustrating a retrieval input screen and Fig. 14 B is a diagram illustrating a result screen.

An embodiment of the invention will be described in detail with reference to the accompanying drawings.

In the embodiment which will be described below, the invention is applied to a content delivery system for delivering delivery information (which will be hereinafter referred to as contents) such as a movie or a music which is constituted by the AV information through an internet.

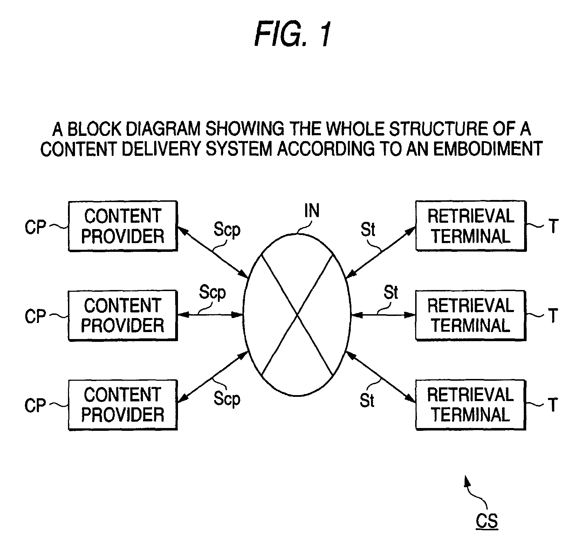

First of all, the whole structure and summary operation of the content delivery system according to the embodiment will be described with reference to Fig. 1. Fig. 1 is a block diagram showing the whole structure of the content delivery system.

As shown in Fig. 1, a content delivery system CS according to the embodiment is constituted by a plurality of content providers CP and a plurality of retrieval terminals T which are connected to mutually transfer data through an internet IN.

In this case, each content provider CP includes a content storage portion for storing contents to be delivered, and a delivery request sent from each retrieval terminal T is received as provider data Scp through the internet IN and delivers the requested contents as the provider data Scp through the internet IN again to the retrieval terminal T transmitting the same request, and furthermore, carries out a process for building a data base which will be described below.

On the other hand, each retrieval terminal T is provided in the house of a user to desire to view the contents, and serves to generate terminal data St including the delivery request and to transmit the terminal data St through the internet IN to the content provider CP storing desired contents, and serves to receive the contents delivered from the content provider CP (including abstraction data which will be described below) as the terminal data St through the internet IN again and to store the terminal data St in a storage portion which will be described below and to output the terminal data St to a display which will be described below, thereby presenting the terminal data St to the user.

In the retrieval terminal T, moreover, there is also performed a partial retrieving process for retrieving a part of the delivered contents which will be described below (a partial retrieving process for extracting a part of the delivered contents in place of the delivered contents themselves).

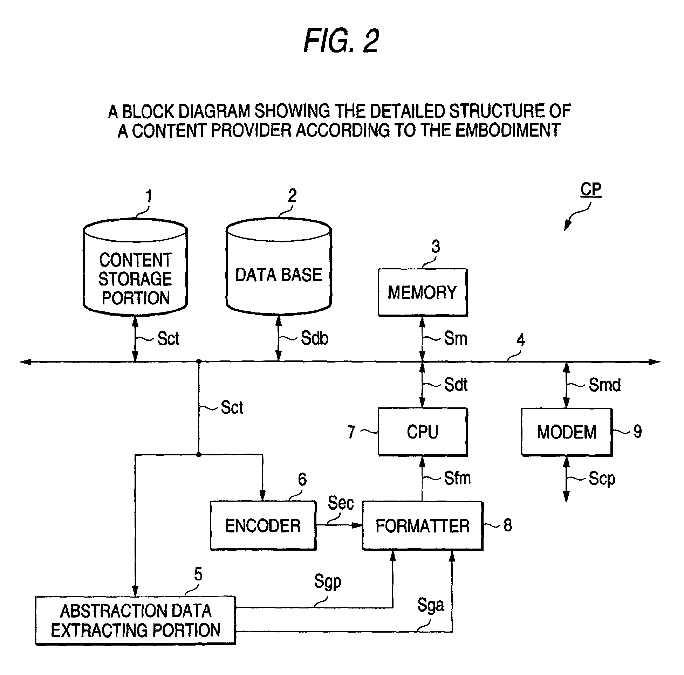

Next, the detailed structure and operation of the content provider CP according to the embodiment will be described with reference to Figs. 2 to 6.

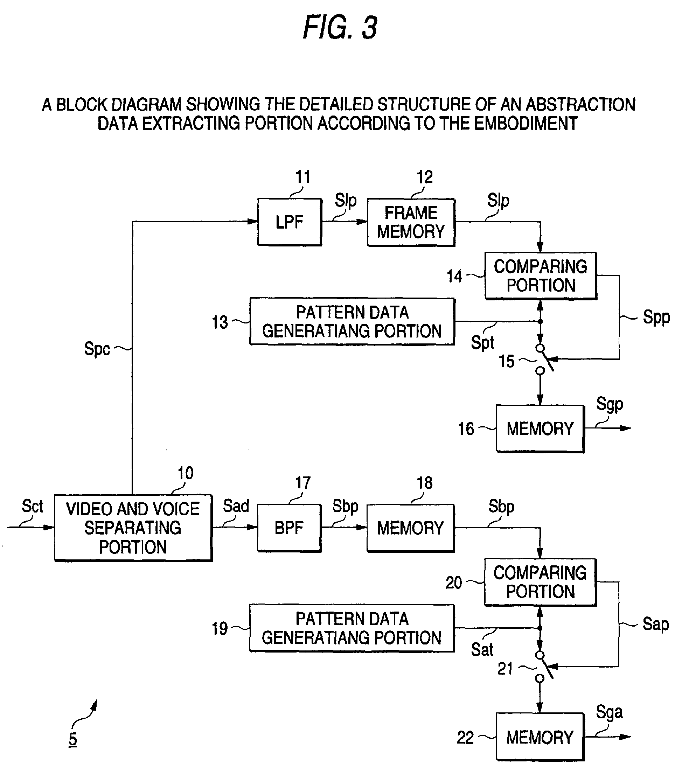

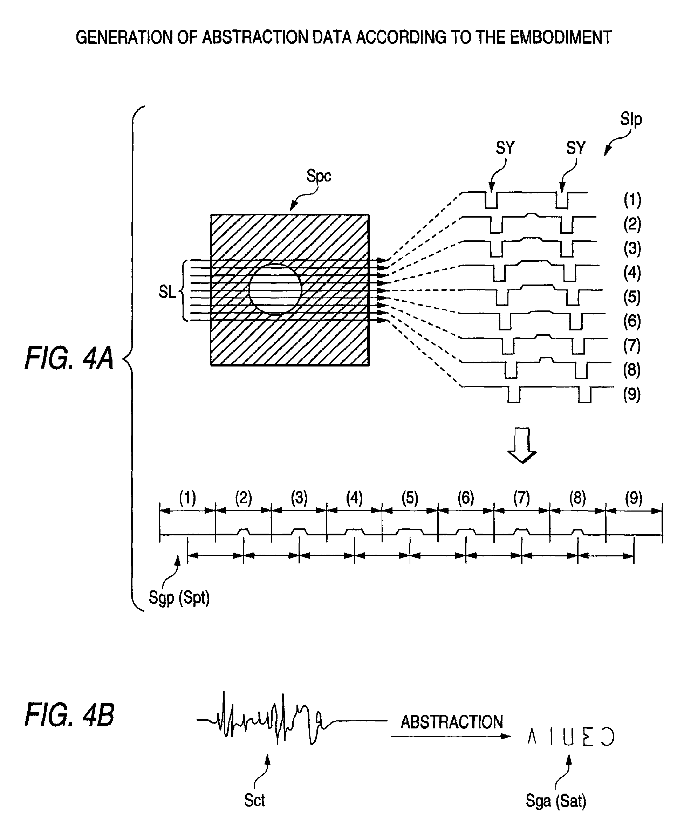

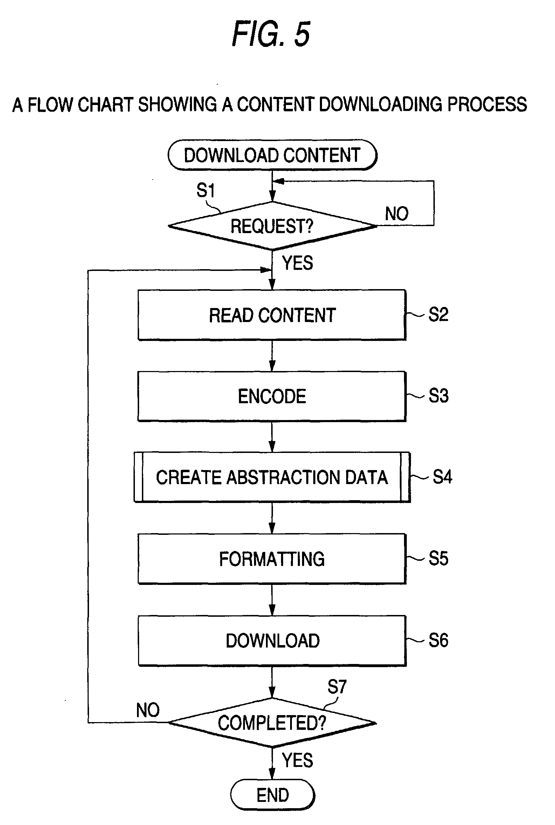

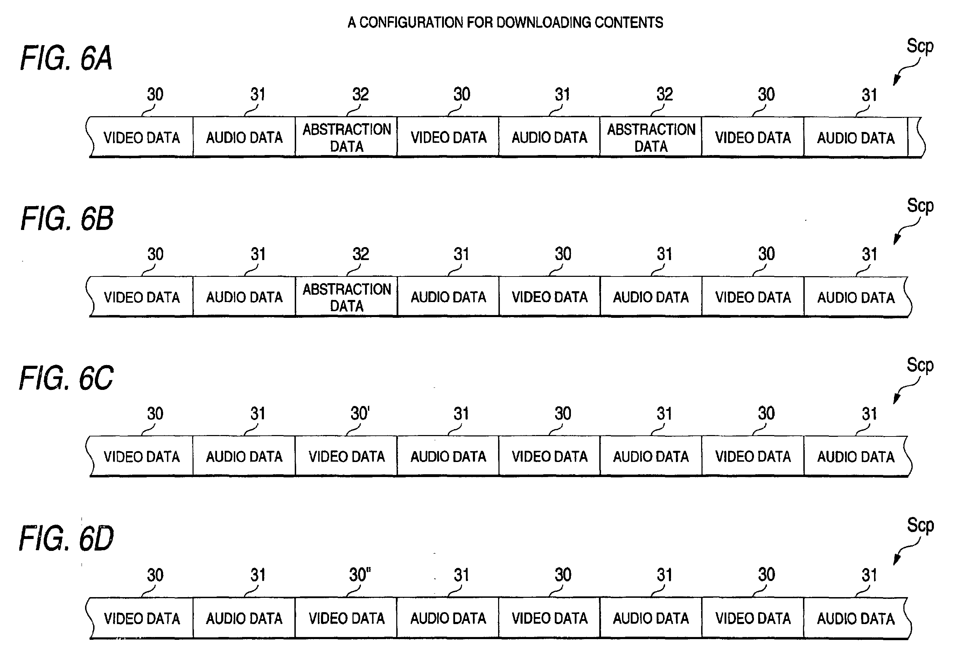

Fig. 2 is a block diagram showing the detailed structure of the content provider CP, Fig. 3 is a block diagram showing the detailed structure of an abstraction data extracting portion included in the content provider CP, Figs. 4A and 4B are diagrams illustrating the generation of the abstraction data in the content provider CP, Fig. 5 is a flow chart showing a content downloading process to be executed in the content provider CP, and Figs. 6A to 6D are diagrams illustrating the configuration of the contents during the downloading of the contents.

As shown in Fig. 2, the content provider CP according to the embodiment is constituted by a content storage portion 1 to be a storage section, a data base 2, a memory 3, an abstraction data extracting portion 5 to be a generating section, an encoder 6, a CPU 7 to be a delivery section, a formatter 8, and a modem 9. Each component is connected such that data can be mutually transferred through a bus 4.

Next, an operation will be described.

First of all, when a delivery request is output as the provider data Scp from any of the retrieval terminals T through the internet IN, the modem 9 carries out a preset input interface operation and outputs the same data as a modem signal Smd to the bus 4.

Next, the CPU 9 acquires the contents of a delivery request included in the modem signal Smd as a data signal Sdt through the bus 4 and retrieves contents corresponding to the delivery request in the content storage portion 1.

When the contents corresponding to the delivery request as the result of the retrieval are output as a content signal Sct from the content storage portion 1, the content signal Sct is output to the encoder 6 and the abstraction data extracting portion 5 through the bus 4.

Then, the encoder 6 converts AV information in the contents output as the content signal Sct into a delivery format preset for delivery through the internet IN, and generates an encode signal Sec and outputs the encode signal Sec to the formatter 8.

On the other hand, the abstraction data extracting portion 5 extracts, by the following method, abstraction data to be information featuring the contents of each of voice information (information about the pronunciation of the Japanese syllabary which is included in a human voice, and so forth) and video information in AV information in the contents output as the content signal Sct and to be information in a smaller amount than that of each of the original voice information and video information for each of the voice information and the video information from the AV information, separates the abstraction data into abstraction data Sga corresponding to the voice information and abstraction data Sgp corresponding to the video information and outputs them to the formatter 8, respectively.

Consequently, the formatter 8 superposes the abstraction data Sga and Sgp on the contents by the following method respectively, and generates a format signal Sfm and outputs the format signal Sfm to the modem 9 through the CPU 7 and the bus 4.

Upon receipt of the format signal Sfm as the modem signal Smd from the bus 4, the modem 9 carries out an output interface process preset thereto and delivers provider data Scp having the contents corresponding to the format signal Sfm to the retrieval terminal T outputting the delivery request through the internet IN.

At this time, the CPU 7 generally controls a series of operations for the content provider CP while transferring necessary information for the memory signal Sm together with the memory 3.

Next, the detailed structure and operation of the abstraction data extracting portion 5 will be described with reference to Figs. 3 and 4.

As shown in Fig. 3, the abstraction data extracting portion 5 according to the embodiment is constituted by a video and voice separating portion 10, an LPF (Low Pass Filter) 11, a frame memory 12, pattern data generating portions 13 and 19, comparing portions 14 and 20, switches 15 and 21, memories 16, 18 and 22, and a BPF (Band Pass Filter) 17.

Next, an operation will be described with reference to Figs. 4A and 4B.

First of all, when a content signal Sct including contents is input from the content storage portion 1 through the bus 4, a video signal Spc and a voice signal Sad which constitute the content signal Sct are separatedby the video and voice separating portion 10 and are output to the LPF 11 and the BPF 17, respectively.

Then, the LPF 11 extracts only a low frequency component in the video signal Spc, and generates a low frequency video signal Slp and outputs the low frequency video signal Slp to the frame memory 12.

Thereafter, the frame memory 12 separates the low frequency video signal Slp every frame and temporarily stores the low frequency video signal Slp thus separated, and outputs the separated signal to the comparing portion 14 in a preset timing.

On the other hand, the pattern data generating portion 13 generates a plurality of pattern data Spt preset to correspond to graphics which might be included in each video signal Spc, and sequentially outputs the pattern data Spt to the comparing portion 14 and the switch 15, respectively.

Consequently, the comparing portion 14 compares the low frequency video signal Slp separated for each frame with the pattern data Spt every frame, and generates a comparison signal Spp to be set to "HIGH" in a timing in which the pattern data Spt having the closest pattern to the contents of a video included in the low frequency video signal Slp input at that time are output, and outputs the comparison signal Spp as a switch control signal to the switch 15.

Consequently, the switch 15 is turned on in a timing in which the comparison signal Spp is set to "HIGH", and thereby outputs, to the memory 16, the pattern data Spt having the closest pattern to the contents of the video included in the low frequency video signal Slp.

The memory 16 temporarily stores the output pattern data Spt and outputs the abstraction data Sgp to the formatter 8 in a preset timing.

Next, the operation of each component for the video signal Spc will be described in detail with reference to Fig. 4A.

First of all, it is assumed that a video including a circle shown in the upper left part of Fig. 4A is included in the video signal Spc.

At this time, the LPF 11 removes a high frequency noise component from the video, and furthermore, causes the frame memory 12 to store the video every frame (every horizontal scanning) therein.

As shown in Fig. 4A, when an intensity signal in a circular part included as the video signal Spc is decomposed every horizontal scanning line SL, there are obtained a plurality of low frequency video signals Slp having a waveform by sequentially scanning the circle (cutting the circle in round slices) in a horizontal direction from the upper side together with a synchronous signal SY indicative of the position of presence of the circle (see the upper right part of Fig. 4A). The low frequency video signals Slp are stored in the frame memory 12 separately.

Next, the low frequency video signals Slp are arranged in order in time series by setting the synchronous signal SY to be a connecting part in the comparing portion 14. According to such a process, in each low frequency video signal Slp in the illustrated case, a portion having an intensity increased cyclically appears in each timing corresponding to a diameter in the vertical direction in the upper left and middle part of Fig. 4A in the circle.

On the other hand, the pattern data generating portion 13 prestores pattern data Spt having a pattern decomposed every horizontal scanning line SL and arranged in time series for plural kinds of basic graphics including the illustrated circle (for example, a circle, a square or a triangle), and successively outputs the pattern data Spt to the comparing portion 14.

Consequently, the comparing portion 14 successively compares the low frequency video signal Slp for each frame which is arranged in time series with the output pattern data Spt, and generates the comparison signal Spp to be set to the "HIGH" in a timing in which the pattern data Spt having the most coincident pattern with the low frequency video signal Slp for each frame are output and outputs the comparison signal Spp to the switch 15.

Then, the switch 15 is turned on in a timing in which the comparison signal Spp is set to the "HIGH". Consequently, the pattern data Spt shown in the lower part of Fig. 4A which have a pattern coincident with the arrangement of the low frequency video signal Slp in time series for each frame corresponding to the circle are output as the abstraction data Sgp to the formatter 8.

On the other hand, the BPF 17 extracts only a preset voice frequency component from the voice signal Sad, and generates an extracted voice signal Sbp and outputs the extracted voice signal Sbp to the memory 18.

Then, the memory 18 temporarily stores the extracted voice signal Sbp and outputs the extracted voice signal Sbp to the comparing portion 20 in a preset timing.

On the other hand, the pattern data generating portion 19 generates a plurality of pattern data Sat preset to indicate a character corresponding to a voice which might be included in each voice signal Sad and sequentially outputs the pattern data Sat to the comparing portion 20 and the switch 21, respectively.

Consequently, the comparing portion 20 successively compares the extracted voice signal Sbp thus stored with the pattern data Sat, generates a comparison signal Sap to be set to the "HIGH" in a timing in which the pattern data Sat included in the closest character to the contents of a voice included in the extracted voice signal Sbp input at that time are output, and outputs the comparison signal Sap as a switch control signal to the switch 21.

Consequently, the switch 21 is turned on in a timing in which the comparison signal Sap is set to the "HIGH" and thereby outputs, to the memory 22, the pattern data Sat including the closest character to the contents of a voice included in the extracted voice signal Sbp.

Then, the memory 22 temporarily stores the pattern data Sat thus output and outputs the patter data Sat as the abstraction data Sga to the formatter 8 in a preset timing.

Next, the operation of each component for the voice signal Sad will be described in detail with reference to Fig. 4B.

First of all, the BPF 17 removes a high frequency noise component and a low frequency noise component from the voice, and causes the memory 18 to store an extracted voice signal Sbp therein and to output the extracted voice signal Sbp to the comparing portion 20.

Then, the comparing portion 20 decomposes the extracted voice signal Sbp for each character and further replaces the character with a corresponding character string to be temporarily stored.

On the other hand, the pattern data Sat having a character string corresponding to a voice signal obtained when plural kinds of characters are pronounced are prestored in the pattern data generating portion 19 and are successively output to the comparing portion 20.

Consequently, the comparing portion 20 successively compares a character string indicative of the contents of the extracted voice signal Sbp with a character string included in each pattern data Sat to be output, generates the comparison signal Sap to be set to the "HIGH" in a timing in which the pattern data Sat having the most coincident character string with the contents of the extracted voice signal Sbp are output, and outputs the comparison signal Sap to the switch 21.

Then, the switch 21 is turned on in a timing in which the comparison signal Sap is set to the "HIGH", and thereby outputs, to the formatter 8, the pattern data Sat shown in Fig. 4B having a character string coincident with the contents of the extracted voice signal Sbp as the abstraction data Sga.

With reference to Figs. 5 and 6, description will be given to a series of content downloading processes (which is mainly executed by the CPU 7) for the retrieval terminal T in the content provider CP having the structure and operation described above.

In the content downloading process, first of all, it is ascertained whether or not the delivery request is given from any of the retrieval terminals T (Step S1). If the delivery request is not given (Step S1 ; NO), the process stands by until the delivery request is given. On the other hand, when the delivery request is given (Step S1 ; YES), contents desired by the delivery request are read from the content storage portion 1 (Step S2) and are converted into a necessary delivery format to be an encode signal Sec in the encoder 6 (Step S3), and abstraction data Sgp and Sga are generated in the abstraction data extracting portion 5 respectively (Step S4) and are output to the formatter 8 together.

Subsequently, the encode signal Sec and the abstraction data Sgp and Sga are superposed (formatted) in the following form in the formatter 8 (Step S5) and are delivered as the format signal Sfm to a desired retrieval terminal T through the internet IN (Step S6).

Then, it is ascertained whether or not the delivery of all the contents is completed (Step S7). If the delivery is not completed (Step S7 ; NO), the routine is returned to the Step S2 to repeat the process described above. On the other hand, if the delivery is completed (Step S7 ; YES), the downloading process is exactly ended.

Next, a format in the delivery to be executed in the Step S6 will be described with reference to Figs. 6A to 6D.

There can be proposed various manners for the format. More specifically, first of all, it is possible to constitute the provider data Scp to include, in a certain cycle, video data 30 corresponding to a video signal Spc, audio data 31 corresponding to a voice signal Sad and abstraction data 32 corresponding to the abstraction data Sgp or Sga as shown in Fig. 6A.

Secondly, it is also possible to cyclically arrange the video data 30 and the audio data 31 to constitute the provider data Scp and to replace data for one frame in the video data 30 with the abstraction data 32 to be delivered as shown in Fig. 6B.

Thirdly, it is further possible to cyclically arrange the video data 30 and the audio data 31 to constitute the provider data Scp and to replace the video data 30 with video data 30' including the abstraction data 32 as a so-called watermark (electronic watermark) therein to be delivered as shown in Fig. 6C.

Fourthly, it is finally possible to cyclically arrange the video data 30 and the audio data 31 to constitute the provider data Scp and to replace the video data 30 with video data 30" obtained by exchanging data on the outside of a valid display screen in the video data 30 (a screen having such a size as to be actually displayed in a display on the retrieval terminal T) with the abstraction data 32 to be delivered as shown in Fig. 6D.

Moreover, the format of the delivery will be described in more detail. For example, in the case in which the delivery of contents is to be carried out in accordance with the form, of a transport stream in a so-called MPEG (Moving Picture Experts Group) method, the abstraction data Sgp or Sga can be included in so-called payload information in each transport packet and can be thus delivered. In this case, the abstraction data Sgp or Sga are delivered corresponding to at least one of address information and time information in the contents which have corresponding content portions to be reproduced.

Moreover, in the case in which voice information is to be delivered, the time information for correspondence to the content body is not required if the abstraction data Sga are delivered every preset time.

Furthermore, in the case in which a video signal is to be delivered, it is possible to deliver the abstraction data Sgp obtained by abstracting an intensity signal for each frame as the payload information for each group including a preset number of frames. In this case, both the intensity signal and a color signal may be abstracted or only the color signal may be abstracted in addition to the abstraction of the intensity signal.

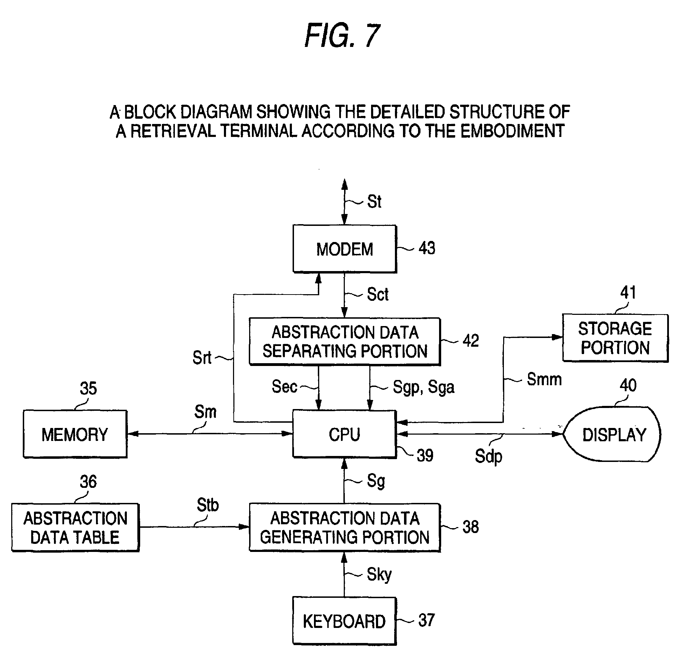

Next, the detailed structure and operation of the retrieval terminal T according to the embodiment (including a part of the operation of the content provider CP to be carried out with the operation) will be described with reference to Figs. 7 to 12.

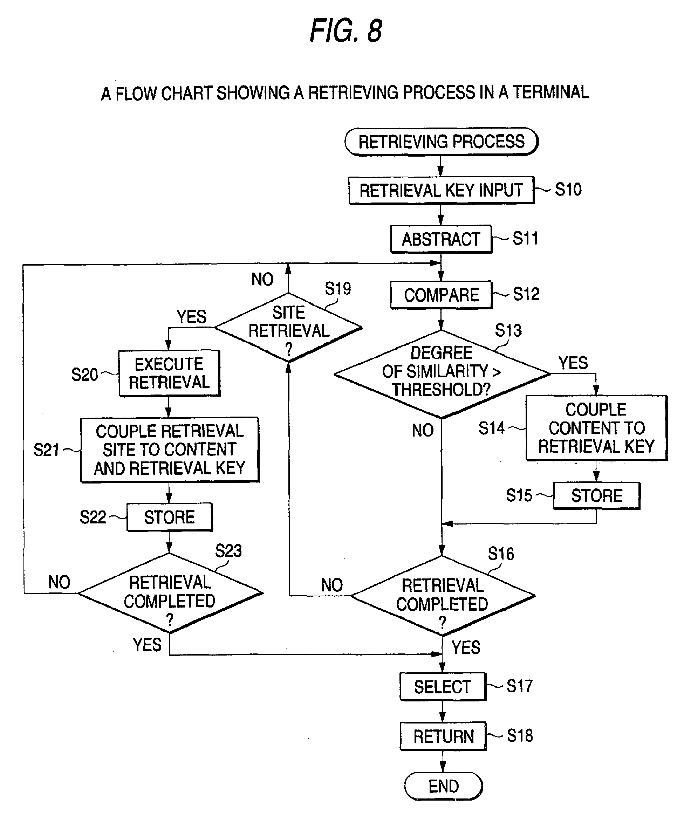

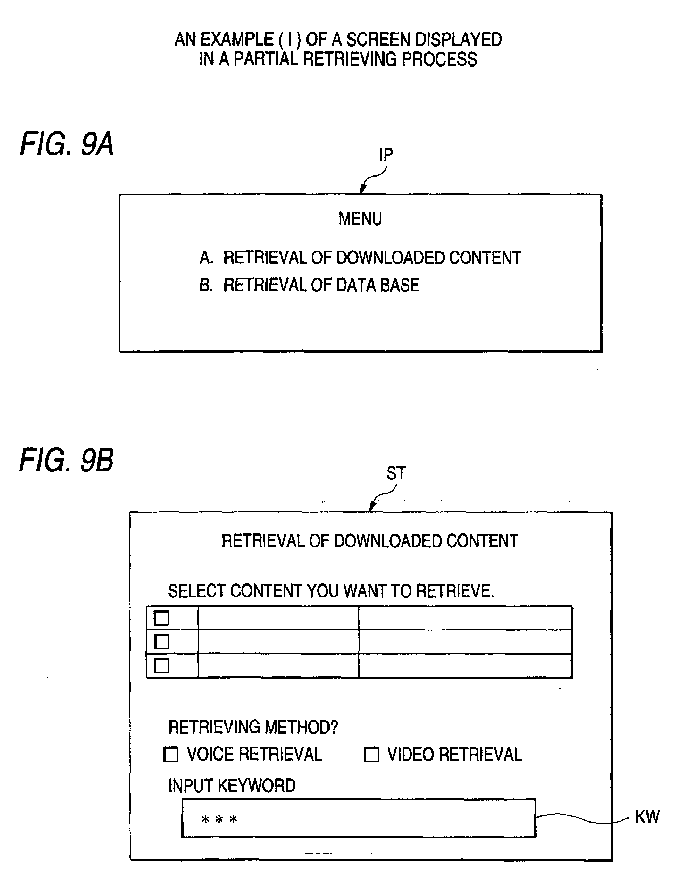

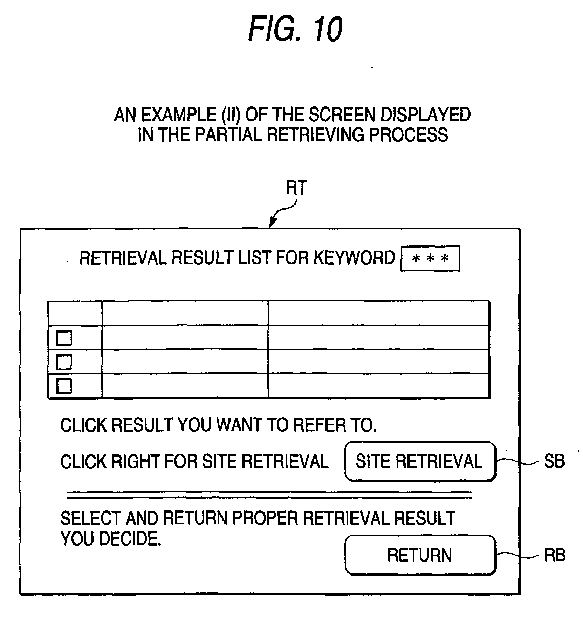

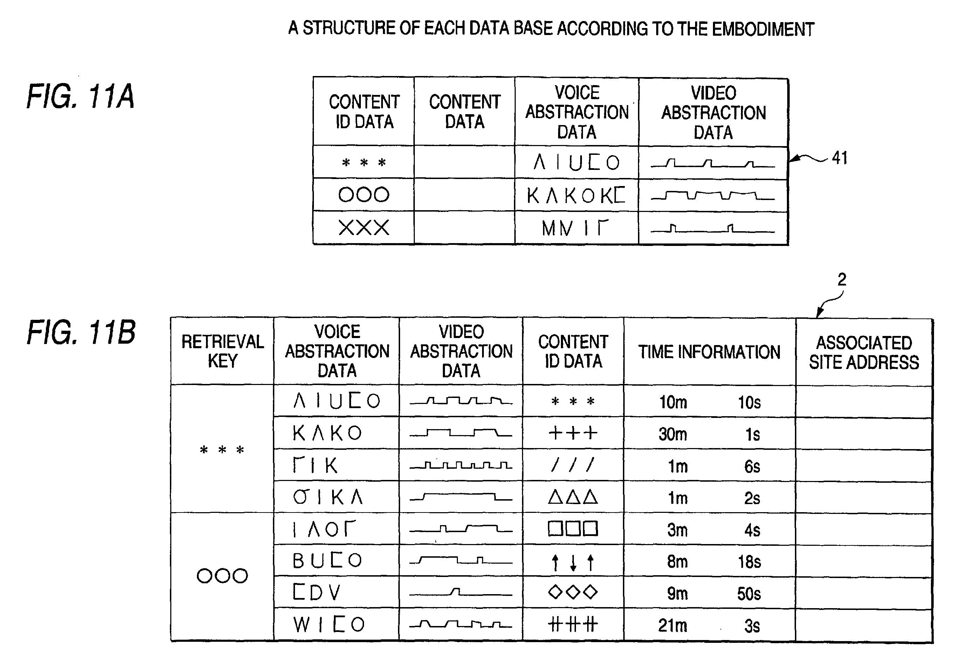

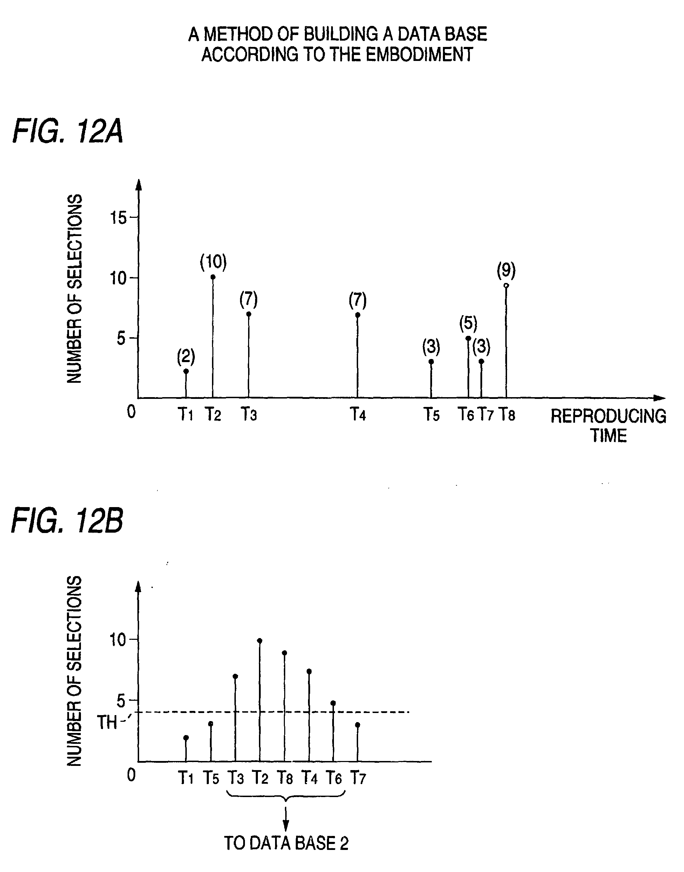

Fig. 7 is a block diagram showing the detailed structure of the retrieval terminal T, Fig. 8 is a flow chart showing a partial retrieving process in the retrieval terminal T, Figs. 9 and 10 are diagrams showing an example of a screen to be displayed in the partial retrieving process, Figs. 11A and 11B are diagrams showing the structure of each data base to be constituted by the retrieving process, and Figs. 12A and 12B are charts illustrating a method of building the data base in the content provider CP.

As shown in Fig. 7, the retrieval terminal T according to the embodiment is constituted by a memory 35, an abstraction data table 36, an abstraction data generating portion 38 to be an abstracting section, a CPU 39 to be a retrieving section, a network retrieving section and a return section, a display 40 to be an output section, a a storage section 41 to be a data base, an abstraction data separating portion 42, and a modem 43 to be an acquiring section.

Next, an operation will be described.

First of all, the delivery request for requesting the delivery of contents from the content provider CP is transmitted to the content provider CP intended for content identification data for identifying the contents through the CPU 39 and the modem 43 when the content identification data are input from a keyboard 37.

Then, the contents delivered as terminal data St together with the abstraction data Sgp or Sga corresponding to the delivery request are subjected to an input interface process preset in the modem 43 and are output as a content signal Sct to the abstraction data separating portion 42.

Subsequently, the abstraction data separating portion 42 separates the abstraction data Sgp and Sga from the content signal Sct and outputs them to the CPU 39, and outputs, to the CPU 39, the encode signal Sec corresponding to the contents included in the content signal Sct.

Consequently, the CPU 39 decodes the encode signal Sec and generates original contents, and outputs and stores the same contents as a memory signal Smm in the storage portion 41.

At the same time, the CPU 39 outputs and stores the separated abstraction data Sgp and Sga as the memory signal Smm in the storage portion 41.

By these processes, a data base constituted by content specifying data for specifying contents, content data to be an original content body (including content identification data for identifying the contents) and abstraction data Sgp and Sga indicative of the contents thereof is built in the storage portion 41 as illustrated in Fig. 11A, for example.

Next, description will be given to an operation to be carried out when a part of desirable contents are to be retrieved by using a retrieval key in the data base built in the storage portion 41.

During the partial retrieval, first of all, when the retrieval key is input in the keyboard 37, a corresponding keyboard signal Sky is generated and output to the abstraction data generating portion 38.

Consequently, the abstraction data generating portion 38 reads, as table data Stb, the abstraction data Sgp or Sga corresponding to the retrieval key input as the keyboard signal Sky from the abstraction data table 36 (that is, a table describing the retrieval key which might be input from the keyboard 37 and the abstraction data Sgp or Sga corresponding to the contents of the retrieval key correspondingly in advance), and outputs the table data Stb as abstraction data Sg to the CPU 39.

Then, the CPU 39 transfers information necessary for a memory signal Sm together with the memory 35, and at the same time, compares the abstraction data Sgp with the abstraction data Sgp and Sga stored in the storage portion 41 and retrieves the abstraction data Sgp and Sga coincident with the abstraction data Sg, extracts contents having a video portion or a voice portion corresponding to the abstraction data Sg and Sga thus retrieved from a data base in the storage portion 41, outputs the contents as a display signal Sdp to the display 40 and displays a video corresponding to the content portion thus extracted, and outputs a voice corresponding to the extracted content portion from a speaker which is not shown.

Moreover, the CPU 39 generates a retrieval result signal Srt by causing time information for specifying a video portion or a voice portion corresponding to the abstraction data Sgp or Sga included in the abstraction data Sg in the extracted contents (that is, reproducing time information of the same portion counted from the reproducing start time of the contents) or address information (that is, information indicative of the position of the same portion in the contents) and the retrieval key information input from the keyboard 37 to correspond to each other, and returns the retrieval result signal Srt through the modem 43 to the content provider CP to be the delivery source of the contents in response to the return instruction of a user, for example.

In the content provider CP, the data base 2 having the following contents causing the time information or address information and the retrieval key information to correspond to each other is built for each of the contents stored in the content storage portion 2 based on the retrieval result signal Srt.

Furthermore, the CPU 39 retrieves a Web site on the internet IN associated with the retrieval key included in the retrieval result signal Srt ifnecessary based on the input from the keyboard 37 when generating the retrieval result signal Srt, and causes the retrieval result signal Srt to have the address of the Web site thus retrieved (including URL (Uniform Resource Locater)) and returns the retrieval result signal Srt to the content provider CP. Then, the content provider CP receiving the same signal builds the data base 2 including the address.

Next, an operation in the partial retrieving process at a series of retrieval terminals T will be more specifically described with reference to Figs. 8 to 12.

First of all, when an initial menu screen IP shown in Fig. 9A is output onto the display 40 and the partial retrieval "A" of the stored contents is selected on the initial menu screen IP, a retrieval input screen ST shown in Fig. 9B is then output. Thereafter, when the selection of the contents to be partially retrieved and the selection of a retrieving method are executed on the retrieval input screen ST, a retrieval key (keyword) to be used for the partial retrieval of the contents is input from the keyboard 37 by using a retrieval key input column KW on the retrieval input screen ST (Step S10), and furthermore, the contents of the retrieval key are abstracted so that the abstraction data Sg are generated (Step S11).

More specifically, at the Step S11, when the retrieving method is video retrieval, for example, a retrieval key of a "circle" is input (Step S10) and pattern data corresponding to the "circle" are read from the abstraction pattern table 36 so that the retrieval key of the "circle" is abstracted. For the pattern data, more specifically, pattern data having a pattern in which the circle is decomposed for each horizontal scanning line and is arranged in time series are read in the same manner as in the case described with reference to Fig. 4A.

In the case in which the retrieving method is voice retrieval, when the retrieval key of a voice to be "en (circle)" is input (Step S10), for example, pattern data corresponding to the "en" are read from the abstraction pattern table 36 so that a retrieval key for the "en" is abstracted. More specifically for the pattern data, pattern data having a character string corresponding to a voice signal obtained by pronunciation of a character to be "en" are read in the same manner as in the case described above with reference to Fig. 4B.

When the abstraction of the retrieval key is completed, the contents of the abstraction data Sg corresponding to the retrieval key are compared with the contents of the abstraction data Sgp and Sga in the data base built in the storage portion 41 and a degree of similarity thereof is decided (Steps S12 and S13). In the decision of the degree of similarity, the degree of similarity is increased when a rate of a coincident portion in the abstraction data becomes higher.

When the degree of similarity is equal to or higher than a preset threshold (Step S13 ; YES), time information or address information indicative of a portion in the contents in the data base which is specified by the similar abstraction data Sgp or Sga is coupled integrally with a similar retrieval key thereof (Step S14), and the contents thereof are temporarily stored in the memory 35 (Step S15) and a result screen RT (see Fig. 10) indicative of a retrieval result (similar result) is displayed on the display 40.

Then, it is ascertained whether or not all retrieval objects are completely retrieved (Step S16). When they are completely retrieved (Step S16 ; YES), the most proper one of the retrieval results displayed on the result screen RT (that is, which is the most coincident with the input retrieval key) is selected on the result screen RT (Step S17), and furthermore, a return button RB on the result screen RT is operated so that the selected result is returned to the content provider CP (Step S18). Thus, the partial retrieving process is ended.

For the contents to be returned, the name of retrieved contents, the content specifying data, the contents of the retrieval key and time information or address information (frame information about a video) indicative of a content portion having contents coincident with the contents of the retrieval key are returned integrally.

In the decision at the Step S16, when the partial retrieval of all the contents is not completed (Step S16 ; NO), a site retrieval button SB is operated on the result screen RT and it is decided whether or not an instruction for retrieving a Web site associated with the input retrieval key is given (Step S19). When the instruction for the retrieval is not given (Step S19 ; NO), the routine is returned to the Step S12 again and the processes for the Steps S12 to S16 are repeated for the contents which have not been partially retrieved completely.

In the decision at the Step S19, when the site retrieval button SB is operated so that an instruction for retrieving the Web site associated with the retrieval key is given (Step S19 ; YES), the retrieval of the associated Web site is executed by a connection to a home page on the internet IN using a usual procedure (Step S20). Furthermore, the address of the Web site thus retrieved and the retrieval key are coupled integrally (Step S21) and they are temporarily stored in the memory 35 (Step S22).

Then, it is ascertained whether or not the retrieval of the Web site is completed (Step S23). When the retrieval is not completed (Step S23 ; NO), the routine is returned to the Step S12 to continuously carry out the retrieval for the next contents or Web site.

In the decision at the Step S23, when the retrieval of the Web site is completed (Step S23 ; YES), the processes of the Steps S17 and S18 are executed including the address of the Web site thus retrieved and the partial retrieving process is ended. At this time, the address of the associated Web site retrieved by the processes of Steps S20 to S23 is also returned integrally with the name of contents, the contents of the retrieval key and the corresponding time information or address information for the contents to be returned in the process of the Step S18.

In the content provider CP to which the retrieval result is returned by the returning process of the Step S18, if content identification (ID) data corresponding to the name of the contents included in the retrieval result thus returned, the contents of the retrieval key, the abstraction data Sgp and Sga used for the retrieval, the corresponding time information or address information and the associated Web site are retrieved, addresses thereof are stored correspondingly. Consequently, a data base 2 shown in Fig. 11B is built.

Next, a method of building the data base 2 will be more specifically described with reference to Figs. 12A and 12B.

As described above, in the content provider CP, the retrieval result sent from each retrieval terminal T is aggregated into the content provider CP so that the data base 2 for each retrieval key is built as shown in Fig. 11B. In the data base 2, the abstraction data Sgp and Sga and the retrieval key are caused to correspond for each portion in the contents indicated by the time information.

In some cases, the content portion selected by the user of the retrieval terminal T to correspond to only one retrieval key (see the Step S17 in Fig. 8) is varied every retrieval terminal T in order to investigate the same retrieval key. Such a phenomenon cannot be avoided as long as the most suitable content portion for the retrieval key is finally selected and determined depending on the subjectivity of the user. For the data base 2, it is necessary to store the retrieval key corresponding to the content portion in such a state that an individual difference is eliminated as much as possible.

When the data base 2 is to be built in the embodiment, first of all, the retrieval result returned from each retrieval terminal T is added to the contents based on one retrieval key in time series in the same contents.

As a result of the retrieval in the contents using one retrieval key, if the number of the retrieval terminals T selecting that a reproducing time T₁ portion in the contents is the most suitable for the retrieval key is "2", the number of the retrieval terminals T selecting a reproducing time T₂ portion is "10", the numbers of the retrieval terminals T selecting a reproducing time T₃ portion and a reproducing time T₄ portion are "7" respectively, the numbers of the retrieval terminals T selecting a reproducing time T₅ portion and a reproducing time T? portion are "3" respectively, the number of the retrieval terminals T selecting a reproducing time T₆ portion is "5" and the number of the retrieval terminals T selecting a reproducing time T₈ portion is "90" as illustrated in Fig. 12A, the reproducing time portions having the number of selections which is equal to or greater than a threshold TH set based on a deviation for the numbers of the selections (the reproducing time T₂, T₃, T₄, T₆ and T₈ portions in Figs. 12A and 12B) are stored to be the content portions suitable for the retrieval key in the data base 2 together with the corresponding abstraction data Sgp and Sga, the time information or address information and the associated Web site address as shown in Fig. 12B.

By applying a so-called majority principle for building, thus, it is possible to build the database 2 capable of carrying out retrieval in the contents with the highest precision for each retrieval key.

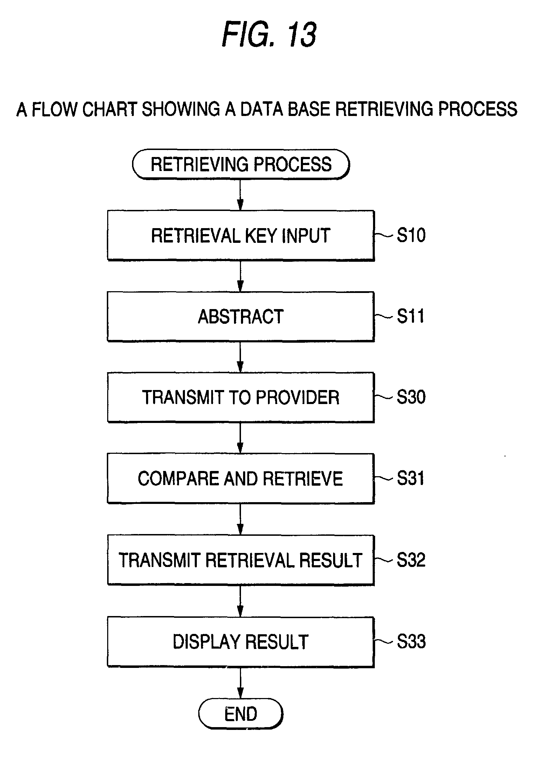

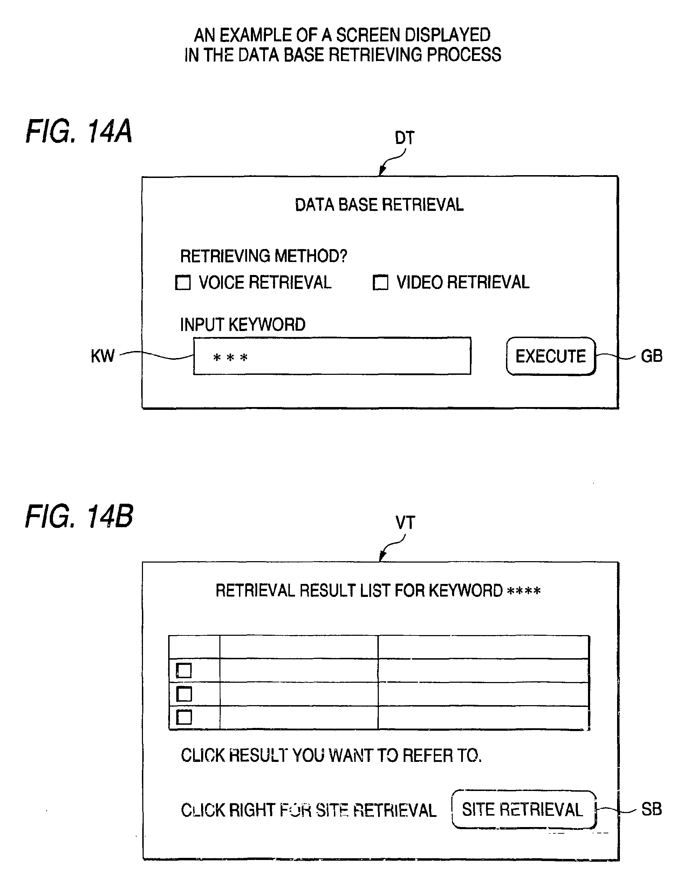

Next, a process for carrying out retrieval, through the retrieval terminal T, in the data base 2 built by the method shown in Figs. 8 to 12 will be described with reference to Figs. 13 and 14.

Fig. 13 is a flow chart showing the data base retrieving process and Figs. 14A and 14B are diagrams showing an example of a screen displayed on the display 40 in the retrieving process.

In the retrieving process, first of all, when an initial menu screen IP shown in Fig. 9A is output onto the display 40 and data base retrieval "B" is selected on the initial menu screen IP, a retrieval input screen DT shown in Fig. 14A is then output. Thereafter, when the selection of a retrieving method is executed on the retrieval input screen DT, a retrieval key to be used for the retrieval of the data base 2 is input from the keyboard 37 by using the retrieval key input column KW on the retrieval input screen DT and an execution button GB is operated (Step S10). In the same manner as described above, next, the contents of the retrieval key are abstracted by the abstraction data generating portion 38 (Step S11) and the abstraction data Sg thus generated are output to the content provider CP (Step S30).

In the content provider CP receiving the abstraction data Sg, the contents of the abstraction data Sg thus transmitted and the abstraction data Sgp and Sga stored in the data base 2 are retrieved and compared with each other (Step S31), and a retrieval result indicative of a content portion corresponding to the abstraction data Sgp or Sga having contents coincident with the contents of the abstraction data Sg thus transmitted is sent to the retrieval terminal T transmitting the abstraction data Sg (Step S32).

Consequently, a result screen VT corresponding to the retrieval result is displayed on the display 40 of the retrieval terminal T which obtains the retrieval result (Step S33), and the retrieving process intended for the data base 2 is ended.

At this time, in the case in which a site retrieval button SB on the result screen VT is operated, the retrieval of a Web site associated with the retrieval key on the internet T is started.

As described above, according to the process in the content delivery system CS according to the embodiment, the inside of the delivered contents is retrieved by using the abstraction data Sgp and Sga in the retrieval terminal T to be the delivery destination of the contents. Consequently, the inside of the contents can be retrieved by the abstraction data Sgp and Sga with high precision which are generated by the content provider CP to be the delivery source. Consequently, it is possible to retrieve the inside of the contents with high precision on the same conditions in all the retrieval terminals T.

Moreover, the abstraction data Sgp and Sga are generated in the content provider CP. Therefore, it is not necessary to generate the abstraction data in each retrieval terminal T. Consequently, it is possible to retrieve the inside of the contents rapidly.

Furthermore, a character string indicative of a voice or a sound included in voice information is generated as the abstraction data Sga. Consequently, it is possible to generate and deliver the abstraction data Sga faithful to the contents of the voice information.

Moreover, the pattern data having the waveform featuring the video information are generated as the abstraction data Sgp. Therefore, it is possible to generate and deliver the abstraction data Sgp faithful to the contents of the video information.

During the delivery, moreover, the abstraction data Sgp and Sga are delivered with an inclusion in the separate information unit from the information unit constituted to include the contents having the contents indicated by the abstraction data Sgp and Sga. Consequently, it is possible to easily acquire the abstraction data Sgp and Sga and the contents separately from each other in the delivery destination.

During the delivery, furthermore, a part of the information unit constituted to include the contents having the contents indicated by the abstraction data Sgp and Sga is replaced with the abstraction data Sgp and Sga and is then delivered. Therefore, it is possible to deliver the abstraction data Sgp and Sga and the corresponding contents in a short time and a small amount of information.

Furthermore, the abstraction data Sgp and Sga are buried in the video information in the information unit constituted to include the contents having the contents indicated by the abstraction data Sgp and Sga and are thus delivered. Consequently, it is possible to deliver the abstraction data Sgp and Sga in privacy.

Moreover, the abstraction data Sgp and Sga are delivered with an inclusion in the outside of the valid display range in the video information included in the information unit constituted to contain the contents having the contents indicated by the abstraction data Sgp and Sga. Consequently, it is possible to deliver the abstraction data Sgp and Sga and the corresponding contents easily and rapidly.

Furthermore, the contents are retrieved based on the abstraction data Sgp and Sga with high precision which are generated in the content provider CP. Thus, it is possible to retrieve the inside of the contents with high precision on the same conditions in all the retrieval terminals T.

Moreover, the retrieval key and the content portion which correspond to each other in the retrieval terminal T are returned to the content provider CP. In the content provider CP, therefore, the retrieval key and the content portion which are returned are changed into a data base correspondingly. Thus, it is possible to easily build the data base 2 with high precision.

Furthermore, the retrieval key and the corresponding contents are returned from a plurality of retrieval terminals T. In the content provider CP, therefore, the data base 2 is built in the so-called majority principle based thereon. Thus, it is possible to build the data base 2 with higher precision.

Moreover, the corresponding address of the associated Web site in the retrieval terminal T is also returned to the content provider CP. Therefore, it is possible to easily build the data base 2 with high precision by changing, into a data base, the retrieval key, the contents and the address of the associated Web site which are returned correspondingly to each other in the content provider CP.

Programs corresponding to the flow charts shown in Figs. 5 and 8 are recorded in a hard disk or a flexible disk to be an information recording medium and are read and executed through a general-purpose personal computer. Thus, the personal computer can be caused to function as the CPU 7 or 39, thereby executing the process according to the embodiment.

As described above, according to the first aspect of the invention, the delivered AV information is retrieved by using the abstraction information in the delivery destination. Consequently, the AV information can be retrieved based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

According to the second aspect of the invention, in addition to the effect of the first aspect of the invention, the data string indicative of a voice or a sound included in the voice information is generated as the abstraction information. Therefore, it is possible to generate and deliver the abstraction information faithful to the contents of the voice information.

According to the third aspect of the invention, in addition to the effect of the first or second aspect of the invention, the pattern data having the waveform featuring the video information are generated as the abstraction information. Therefore, it is possible to generate and deliver the abstraction information faithful to the contents of the video information.

According to the fourth aspect of the invention, in addition to the effect of any of the first to third aspects of the invention, the abstraction information is delivered with an inclusion in the separate information unit from the information unit constituted to include the AV information having the contents indicated by the abstraction information. Consequently, it is possible to easily acquire the abstraction information and the AV information separately from each other in the delivery destination.

According to the fifth aspect of the invention, in addition to the effect of any of the first to third aspects of the invention, a part of the information unit constituted to include the AV information having the contents indicated by the abstraction information is replaced with the abstraction information and is then delivered. Therefore, it is possible to deliver the abstraction information and the corresponding AV information in a short time and a small amount of information.

According to the sixth aspect of the invention, in addition to the effect of any of the first to third aspects of the invention, the abstraction information is buried in the video information in an information unit constituted to include the AV information having the contents indicated by the abstraction information and is thus delivered. Therefore, it is possible to deliver the abstraction information in privacy.

According to the seventh aspect of the invention, in addition to the effect of any of the first to third aspects of the invention, the abstraction information is included in the outside of the valid display range in the video information included in the information unit constituted to contain the AV information having the contents indicated by the abstraction information and is thus delivered. Therefore, it is possible to deliver the abstraction information and the corresponding AV information easily and rapidly.

According to the eighth aspect of the invention, in addition to the effect of any of the first to seventh aspects of the invention, the AV information is retrieved based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

According to the ninth aspect of the invention, in addition to the effect of the eighth aspect of the invention, the AV information can be retrieved based on the abstraction information with high precision which is generated in the delivery source, and furthermore, a user can easily confirm each of the results of the retrieval in a delivery destination. Therefore, even if the results of the retrieval include an improper result, the same result can be removed in judgment of the user.

According to the tenth aspect of the invention, in addition to the effect of the eighth or ninth aspect of the invention, the retrieval result information generated based on the result of the retrieval is returned to the AV information delivery device. Therefore, the returned retrieval result information is simply summed and changed into a data base in the AV information delivery device. Thus, it is possible to automatically and easily build a data base with high precision.

According to the eleventh aspect of the invention, in addition to the effect of the tenth aspect of the invention, the retrieval key information, the content identification data, and at least one of the address information and the time information which are caused to correspond to each other in the AV information retrieving device are returned to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

According to the twelfth aspect of the invention, in addition to the effect of the tenth or eleventh aspect of the invention, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

According to the thirteenth aspect of the invention, in addition to the effect of the tenth aspect of the invention, the retrieval result information returned from the AV information retrieving device is simply summed and changed into a data base. Consequently, it is possible to automatically build a data base with high precision.

According to the fourteenth aspect of the invention, in addition to the effect of the thirteenth aspect of the invention, the retrieval key information, the content identification data and at least one of the address information and the time information which are caused to correspond to each other in the AV information retrieving device are returned, and the retrieval key information and the content identification data which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

According to the fifteenth aspect of the invention, in addition to the effect of the twelfth aspect of the invention, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

According to the sixteenth aspect of the invention, in addition to the effect of the fourteenth or fifteenth aspect of the invention, the degree of correlation of the retrieval key information and the content identification data is decided in the majority principle intended for all the retrieval result information and only the retrieval result information having the high degree of correlation is stored. Therefore, as the summarization of the retrieval result information proceeds, the retrieval result information having a low association of the retrieval key information with the content identification data is automatically deleted. Thus, it is possible to automatically increase the precision in a data base.

According to the seventeenth aspect of the invention, in addition to the effect of any of the thirteenth to sixteenth aspects of the invention, it is possible to retrieve the necessary AV information with high precision based on a data base having high precision.

According to the eighteenth aspect of the invention, it is possible to retrieve the AV information rapidly with high precision on the same conditions in all the AV information retrieving devices.

According to the nineteenth aspect of the invention, the delivered AV information is retrieved by using the abstraction information in the delivery destination. Consequently, the AV information can be retrievedbased on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

According to the twentieth aspect of the invention, in addition to the effect of the nineteenth aspect of the invention, the AV information is retrieved based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

According to the twenty-first aspect of the invention, in addition to the effect of the twentieth aspect of the invention, the AV information can be retrieved based on the abstraction information with high precision which is generated in the delivery source, and furthermore, the user can easily confirm each of the results of the retrieval in a delivery destination. Therefore, even if the results of the retrieval include an improper result, the same result can be removed in judgment of the user.

According to the twenty-second aspect of the invention, in addition to the effect of the twentieth or twenty-first aspect of the invention, the retrieval result information generated based on the result of the retrieval is returned to the AV information delivery device. Therefore, the returned retrieval result information is simply summed and changed into a data base in the AV information delivery device. Thus, it is possible to automatically and easily build a data base with high precision.

According to the twenty-third aspect of the invention, in addition to the effect of the twenty-second aspect of the invention, the retrieval key information, the content identification data, and at least one of the address information and the time information which are caused to correspond to each other in the AV information retrieving device are returned to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

According to the twenty-fourth aspect of the invention, in addition to the effect of the twenty-second or twenty-third aspect of the invention, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

According to the twenty-fifth aspect of the invention, in addition to the effect of the twenty-second aspect of the invention, the retrieval result information returned from the AV information retrieving device is simply summed and changed into a database. Consequently, it is possible to automatically build a data base with high precision.

According to the twenty-sixth aspect of the invention, in addition to the effect of the twenty-fifth aspect of the invention, the retrieval key information, the content identification data and at least one of the address information and the time information which are caused to correspond to each other in the AV information retrieving device are returned, and the retrieval key information, the content identification data and at least one of the address information and the time information which are returned are changed into a data base correspondingly. Thus, it is possible to easily build a data base with high precision.

Moreover, the retrieval key information and the content identification data and at least one of the address information and the time information which correspond thereto are returned from a plurality of AV information retrieving devices. In the AV information delivery device, therefore, a data base is built in a so-called majority principle based thereon. Thus, it is possible to build a data base with higher precision.

According to the twenty-seventh aspect of the invention, in addition to the effect of the twenty-fourth aspect of the invention, the corresponding network information in the AV information retrieving device is also returned to the AV information delivery device. Therefore, it is possible to easily build a data base with high precision by changing, into a data base, the retrieval key information and the network information and other retrieval result information which are returned correspondingly to each other in the AV information delivery device.

According to the twenty-eighth aspect of the invention, in addition to the effect of the twenty-sixth or twenty-seventh aspect of the invention, the degree of correlation of the retrieval key information and the content identification data is decided in the majority principle intended for all the retrieval result information and only the retrieval result information having the high degree of correlation is stored. Therefore, as the summarization of the retrieval result information proceeds, the retrieval result information having a low association of the retrieval key information with the content identification data is automatically deleted. Thus, it is possible to automatically increase the precision in a data base.

According to the twenty-ninth aspect of the invention, in addition to the effect of any of the twenty-fifth to twenty-eighth aspects of the invention, it is possible to retrieve the necessary AV information with high precision based on a data base having high precision.

According to the thirtieth aspect of the invention, the delivery computer functions to retrieve the delivered AV information by using the abstraction information in the delivery destination. Consequently, the AV information can be retrieved based on the abstraction information with high precision which is generated in the delivery source. Thus, it is possible to retrieve the AV information with high precision on the same conditions in all the delivery destinations.

Moreover, the delivery computer functions to generate the abstraction information in the delivery source. Therefore, it is not necessary to generate the abstraction information in the delivery destination. Thus, the AV Information can be retrieved rapidly.

According to the thirty-first aspect of the invention, in addition to the effect of the thirtieth aspect of the invention, the retrieving computer functions to retrieve the AV information based on the abstraction information with high precision which is generated in the delivery source. Thus, it is possible to retrieve the AV information with high precision on the same conditions in all the delivery destinations.

Moreover, the abstraction information is generated in the delivery source. Therefore, it is not necessary to generate the abstraction information in the delivery destination. Thus, the AV information can be retrieved rapidly.

According to the thirty-second aspect of the invention, in addition to the effect of the thirty-first aspect of the invention, the AV information can be retrieved based on the abstraction information with high precision which is generated in the delivery source, and furthermore, the user can easily confirm each of the results of the retrieval in the delivery destination. Therefore, even if the results of the retrieval include an improper result, the same result can be removed in judgment of the user.

According to the thirty-third aspect of the invention, in addition to the effect of the thirty-first or thirty-second aspect of the invention, the retrieving computer functions to return the retrieval result information generated based on the result of the retrieval to the AV information delivery device. Therefore, the returned retrieval result information is simply summed and changed into a data base in the AV information delivery device. Thus, it is possible to automatically and easily build a data base with high precision.

According to the thirty-fourth aspect of the invention, in addition to the effect of the thirty-third aspect of the invention, the retrieving computer functions to return the retrieval key information, the content identification data, and at least one of the address information and the time information which are caused to correspond to each other in the AV information retrieving device to the AV information delivery device. In the AV information delivery device, therefore, the retrieval key information, the content identification data and at least one of the address information and the time information which are returned are changed into a data base correspondingly. Thus, it is possible to easily build a data base with high precision.

Moreover, the retrieval key information and the content identification data and the time information which correspond thereto are returned from a plurality of AV information retrieving devices. In the AV information delivery device, therefore, a data base is built in a so-called majority principle based thereon. Thus, it is possible to build a data base with higher precision.

According to the thirty-fifth aspect of the invention, in addition to the effect of the thirty-third or thirty-fourth aspect of the invention, the retrieving computer functions to return the corresponding network information in the AV information retrieving device to the AV information delivery device. Therefore, it is possible to easily build a data base with high precision by changing, into a data base, the retrieval key information and the network information and other retrieval result information which are returned correspondingly to each other in the AV information delivery device.

According to the thirty-sixth aspect of the invention, the retrieval result information returned from the AV information retrieving device is simply summed and changed into a data base. Consequently, it is possible to automatically build a data base with high precision.

According to the thirty-seventh aspect of the invention, in addition to the effect of the thirty-sixth aspect of the invention, the retrieval key information, the content identification data and at least one of the address information and the time information which are caused to correspond to each other in the AV information retrieving device are returned, and the retrieval key information, the content identification data and at least one of the address information and the time information which are returned are changed into a data base correspondingly. Thus, it is possible to easily build a data base with high precision.

Moreover, the retrieval key information and the content identification data and the time information which correspond thereto are returned from a plurality of AV information retrieving devices. In the AV information delivery device, therefore, a data base is built in a so-called majority principle based thereon. Thus, it is possible to build a data base with higher precision.

According to the thirty-eighth aspect of the invention, the delivery computer functions to return the corresponding network information in the AV information retrieving device to the AV information delivery device. Therefore, it is possible to easily build a data base with high precision by changing, into a data base, the retrieval key information and the network information and other retrieval result information which are returned correspondingly to each other in the AV information delivery device.

According to the thirty-ninth aspect of the invention, in addition to the effect of the thirty-seventh or thirty-eighth aspect of the invention, the delivery computer functions to decide the degree of correlation of the retrieval key information and the content identification data in the majority principle intended for all the retrieval result information and to store only the retrieval result information having the high degree of correlation. Therefore, as the summarization of the retrieval result information proceeds, the retrieval result information having a low association of the retrieval key information with the content identification data is automatically deleted. Thus, it is possible to automatically increase the precision in a data base.

According to the fortieth aspect of the invention, it is possible to retrieve the necessary AV information with high precision based on a data base having high precision.

## Claims

1. An AV information delivery device comprising:
a storage section for storing AV information including at least one of voice information and video information;
an abstracting section for abstracting at least a part of the stored AV information, and generating abstraction information indicative of contents of the AV information; and
a delivery section for delivering the generated abstraction information together with the AV information having the contents indicated by the abstraction information.

2. The AV information delivery device according to claim 1, wherein the abstracting section generates a data string indicative of a voice or sound included in the voice information as the abstraction information.

3. The AV information delivery device according to claim 1, wherein the abstracting section generates pattern data having a waveform featuring the video information as the abstraction information.

4. The AV information delivery device according to claim 1, wherein the delivery section delivers the generated abstraction information with an inclusion in a separate information unit from an information unit, the information unit including the AV information having the contents indicated by the abstraction information.

5. The AV information delivery device according to claim 1, wherein the delivery section replaces, with the abstraction information, apart of an information unit including the AV information having the contents indicated by the generated abstraction information; and
the delivery section delivers the abstraction information.

6. The AV information delivery device according to claim 1, wherein the delivery section buries the abstraction information in the video information in an information unit including the AV information having the contents indicated by the generated abstraction information; and
the delivery section delivers the abstraction information.

7. The AV information delivery device according to claim 1, wherein the delivery section includes the abstraction information in an outside of a valid display range in the video information included in an information unit containing the AV information having the contents indicated by the generated abstraction information; and
the delivery section delivers the abstraction information.

8. An AV information retrieving device retrieving the AV information in the data base in the AV information delivery device according to claim 1 by using retrieval key information, comprising:
an acquiring section for acquiring the abstraction information delivered and the AV information delivered;
an input section for inputting the retrieval key information;
an abstracting section for abstracting the retrieval key information inputted and generating abstraction key information; and
a retrieving section for retrieving the delivered abstraction information which is similar to the generated abstraction key information.

9. The AV information retrieving device according to claim 8, further comprising an output section for outputting the AV information corresponding to the abstraction information retrieved by the retrieving section as the AV information corresponding to the retrieval key information.

10. The AV information retrieving device according to claim 8, further comprising a return section for returning, to the AV information delivery device, retrieval result information generated based on a retrieval result obtained by the retrieving section.

11. The AV information retrieving device according to claim 10, wherein the retrieval result information comprrises:
the retrieval key information;
content identification data for specifying contents including at least the abstraction information set to be similar to the retrieval key information by the retrieving section and the AV information corresponding to the abstraction information; and
at least one of address information and time information which indicate a portion similar to the retrieval key information in the contents.

12. The AV information retrieving device according to claim 10, further comprising a network retrieving section for retrieving network information present on a network which corresponds to the retrieval key information,
wherein the network information retrieved is included in the retrieval result information and returned to the AV information delivery device through the return section.

13. An AV information delivery device comprising a data base for storing the retrieval result information returned from the AV information retrieving device according to claim 10.

14. The AV information delivery device according to claim 13, wherein the retrieval result information comprises:
the retrieval key information;
content identification data for specifying contents including at least the abstraction information set to be similar to the retrieval key information by the retrieving section and the AV information corresponding to the abstraction information; and
at least one of address information and time information which indicate a portion similar to the retrieval key information in the contents, and
the data base stores the retrieval key information, the content identification data and at least one of the address information and the time information correspondingly to each other.

15. An AV information delivery device comprising a data base for storing the retrieval key information, the content identification data, at least one of the address information and the time information and the network information which are included in the retrieval result information returned from the AV information retrieving device according to claim 12 correspondingly to each other.

16. The AV information delivery device according to claim 14, wherein the data base decides a degree of correlation of the retrieval key information and the content identification data in amajorityprinciple intended for all the retrieval result information and stores only the retrieval result information having the high degree of correlation.

17. An AV information retrieving device for retrieving the AV information in the data base in the AV information delivery device according to any of claims 13 to 16 by using data base retrieval information, comprising:
an input section for inputting the data base retrieval information;
a retrieving section for retrieving an inside of the data base by using the input data base retrieval information and retrieving the AV information corresponding to the input data base retrieval information; and
an output section for outputting the retrieved AV information as the AV information corresponding to the data base retrieval information.

18. An AV information delivery retrieving system comprising:
an AV information delivery device; and
an AV information retrieving device,
wherein the AV information delivery device comprising:
a storage section for storing AV information including at least one of voice information and video information;
an abstracting section for abstracting at least a part of the stored AV information, and generating abstraction information indicative of contents of the AV information; and
a delivery section for delivering the generated abstraction information together with the AV information having the contents indicated by the abstraction information,
wherein the AV information retrieving device retrieves the AV information in the data base in the AV information delivery device by using retrieval key information, the AV information retrieving device comprising:
an acquiring section for acquiring the abstraction information delivered and the AV information delivered;
an input section for inputting the retrieval key information;
an abstracting section for abstracting the retrieval key information inputted and generating abstraction key information; and
a retrieving section for retrieving the delivered abstraction information which is similar to the generated abstraction key information.

19. An AV information delivery method comprising the steps of:
abstracting at least a part of AV information including at least one of voice information and video information;
generating abstraction information indicative of contents of the Av information; and
delivering the generated abstraction information together with the AV information having the contents indicated by the abstraction information.

20. An AV information retrieving method of retrieving the AV information delivered together with the abstraction information by the AV information delivery method according to claim 19 by using retrieval key information, comprising the steps of:
acquiring the abstraction information delieved and the AV information delivered;
inputting the retrieval key information;
abstracting the retrieval key information thus input and generating abstraction key information; and
retrieving the delivered abstraction information which is similar to the generated abstraction key information.

21. The AV information retrieving method according to claim 20, further comprising an output step of outputting the AV information corresponding to the abstraction information retrieved at the retrieving step as the AV information corresponding to the retrieval key information.

22. The AV information retrieving method according to claim 20, further comprising a return step of returning retrieval result information generatedbased on a retrieval result obtained at the retrieving step.

23. The AV information retrieving method according to claim 22, wherein the retrieval result information comprises:
the retrieval key information;
content identification data for specifying contents including at least the abstraction information set to be similar to the retrieval key information by the retrieving section and the AV information corresponding to the abstraction information; and
at least one of address information and time information which indicate a portion similar to the retrieval key information in the contents.

24. The AV information retrieving method according to claim 22, further comprising a network retrieving step of retrieving network information present on a network which corresponds to the retrieval key information,
the network information thus retrieved being included in the retrieval result information and being returned at the returning step.

25. The AV information delivery method comprising a data base step of storing the retrieval result information returned by the AV information retrieving method according to claim 22.

26. The AV information delivery method according to claim 25, wherein the retrieval result information comprises:
the retrieval key information;
content identification data for specifying contents including at least the abstraction information set to be similar to the retrieval key information at the retrieving step and the AV information corresponding to the abstraction information; and
at least one of address information and time information which indicate a portion similar to the retrieval key information in the contents, and
the retrieval key information, the content identification data and at least one of the address information and the time information are stored correspondingly to each other at the data base step.

27. The AV information delivery method comprising a data base step of storing the retrieval key information, the content identification data, at least one of the address information and the time information and the network information which are included in the retrieval result information returned by the AV information retrieving method according to claim 24 correspondingly to each other.

28. The AV information delivery method according to claim 26, wherein a degree of correlation of the retrieval key information and the content identification data is decided in a majority principle intended for all the retrieval result information and only the retrieval result information having the high degree of correlation is stored at the data base step.

29. An AV information retrieving method of retrieving the AV information stored by the AV information delivery method according to claim 25 by using data base retrieval information, comprising the steps of:
inputting the data base retrieval information;
retrieving an inside of the data base by using the input data base retrieval information and retrieving the AV information corresponding to the input data base retrieval information; and
outputting the retrieved AV information as the AV information corresponding to the data base retrieval information.

30. An information recording medium recording an AV information delivery program to be readable through a delivery computer included in an AV information delivery device containing a storage section for storing AV information including at least one of voice information and video information, wherein the delivery computer is caused to process the program comprising:
abstracting at least a part of the AV information;
generating abstraction information indicative of contents of the AV information; and
delivering the generated abstraction information together with the AV information having the contents indicated by the abstraction information.

31. An information recording medium recording an AV information retrieval program to be readable through a retrieving computer included in an AV information retrieving device for retrieving, by using retrieval key information, the AV information delivered together with the abstraction information through the AV information delivery device according to claim 29, wherein the retrieving computer is caused to process the program comprising:
acquiring the abstraction information and the AV information which are delivered;
inputting the retrieval key information;
abstracting the retrieval key information inputted;
generating abstraction key information; and
retrieving the delivered abstraction information which is similar to the generated abstraction key information.

32. The information recording medium recording the AV information retrieval program to be readable through the retrieving computer according to claim 31, wherein the retrieving computer is further caused to process the program comprising:
outputting, as the AV information corresponding to the retrieval key information, the AV information corresponding to the abstraction information retrieved by the retrieving computer functioning as the retrieving step.

33. The information recording medium recording the AV information retrieval program to be readable through the retrieving computer according to claim 31, the program further comprising:
returning retrieval result information generated based on a retrieval result in the retrieving computer functioning as the retrieving section to the AV information delivery device.

34. The information recording medium recording the AV information retrieval program to be readable through the retrieving computer according to claim 33, wherein the retrieval result information comprises:
the retrieval key information;
content identification data for specifying contents including at least the abstraction information set to be similar to the retrieval key information by the retrieving computer functioning as the retrieving section and the AV information corresponding to the abstraction information; and
at least one of address information and time information which indicate a portion similar to the retrieval key information in the contents.

35. The information recording medium recording the AV information retrieval program to be readable through the retrieving computer according to claim 33, the program further comprising a network retrieving section for retrieving network information present on a network which corresponds to the retrieval key information,
wherein the network information retrieved is included in the retrieval result information and returned to the AV information delivery device through the retrieving computer functioning as the return step.

36. An information recording medium recording the AV information delivery program to be readable through the delivery computer, wherein the delivery computer is caused to process the program comprising:
storing the retrieval result information returned from the AV information retrieving device according to claim 33.

37. The information recording medium recording the AV information delivery program to be readable through the delivery computer according to claim 36, wherein the retrieval result information comprises:
the retrieval key information;
content identification data for specifying contents including at least the abstraction information set to be similar to the retrieval key information by the retrieving section and the AV information corresponding to the abstraction information; and
at least one of address information and time information which indicate a portion similar to the retrieval key information in the contents, and
the delivery computer functioning as the data base is caused to function to store the retrieval key information, the content identification data and at least one of the address information and the time information correspondingly to each other.

38. An information recording medium recording the AV information delivery program to be readable through the delivery computer, wherein the delivery computer is caused to process the program comprising:
storing the retrieval key information, the content identification data, at least one of the address information and the time information and the network information which are included in the retrieval result information returned from the AV information retrieving device according to claim 35 correspondingly to each other.

39. The information recording medium recording the AV information delivery program to be readable through the delivery computer according to claim 37, the program further comprising:
deciding a degree of correlation of the retrieval key information and the content identification data based on a majority principle intended for all the retrieval result information; and
storing only the retrieval result information having the high degree of correlation.

40. An information recording medium recording an AV information retrieval program to be readable through a retrieving computer in an AV information retrieving device for retrieving the AV information stored in the AV information delivery device according to claim 36 by using data base retrieval information, wherein the retrieving computer is caused to process the program comprising:
inputting the data base retrieval information;
retrieving an inside of the data base by using the input data base retrieval information and retrieving the AV information corresponding to the input data base retrieval information; and
outputting the retrieved AV information as the AV information corresponding to the data base retrieval information.
